# EUROPÄISCHE PATENTSCHRIFT

(11) **EP 0 931 716 B1**
(45) Veröffentlichungstag und Bekanntmachung des Hinweises auf die Patenterteilung: **15.05.2002**
(21) Anmeldenummer: 98124729.9
(22) Anmeldetag: 28.12.1998
(51) Int. Cl.: B62D 33/06

(54) **Boden-Konstruktion am kippbaren Fahrerhaus eines Lastkraftwagen**
Floor construction of a tilt cab truck
Construction de plancher d'une cabine basculante d'un camion

(30) Priorität: 22.01.1998 DE 19802092
(43) Veröffentlichungstag der Anmeldung: 28.07.1999
(73) Patentinhaber: MAN Nutzfahrzeuge Aktiengesellschaft, 80976 München (DE)
(72) Erfinder: Kneifel, Eberhard Dipl.-Ing., 89250 Senden (DE); Koch, Erich Dipl.-Ing. (FH), 85757 Karlsfeld (DE); Schönegger-Fösleitner, Erich Dipl.-Ing. (FH), 4400 Steyr (AT); Watzek, Gerhard Dipl.-Ing. (FH), 80935 München (DE)

(56) Entgegenhaltungen:
- EP-A- 0 247 295
- DE-A- 3 932 830
- DE-C- 4 446 046
- US-A- 3 055 699

## Beschreibung

Die Erfindung betrifft gemäß dem Oberbegriff des Anspruchs 1 eine Boden-Konstruktion am kippbaren Fahrerhaus eines Lastkraftwagen, dessen Boden aus einem Motortunnelblech und mehreren Bodenblechen sowie inneren und äußeren Längsträgern zusammengesetzt ist. Eine solche gattungsgumäße Bodenkonstrucktion ist aus der EP 0 247 295 A bekannt.

Bei LKW-Fahrerhäusern wird die tragende Struktur der Bodengruppe in der Regel durch vier Längsträger gebildet, wobei zwei an den Außenlängsseiten des Fahrerhauses und zwei weiter innen, links und rechts neben dem Motortunnel angeordnet sind. Diese vier Längsträger sind in der Regel durch eigenständige, in Profilform gepreßte Teile gebildet, die mit Anlageflanschen an den Bodenblechen zur Anlage gebracht und dort angeschweißt werden und dann einen geschlossenen Kastenträger bilden. Diese Bodengruppenteile werden dann durch ein für den jeweiligen Motoreinbau entsprechend gestaltetes Motortunnelblech zur fertigen Bodengruppe verbunden. Demnach besteht eine solche Fahrerhaus-Bodengruppe somit aus sieben Hauptbauteilen, nämlich einem Motortunnelblech, zwei Bodenblechen und vier Längsträgern.

Für die Fahrer- und Beifahrersitzbefestigung wurden in LKW-Fahrerhäusern bisher an den Oberseiten der Bodenbleche eigenständig hergestellte Konsolen vorgesehen, die. mit der Bodenstruktur verschweißt oder verschraubt sind. Diese Konsolen mußten insbesondere dann auf eine hohe Strukturfestigkeit ausgelegt sein, wenn Sitze mit integrierten Sicherheitsgurten anzubauen waren.

Auch die Heizluftverteilung einer Luftzusatzheizung bzw. Standheizung erfolgte bisher relativ kompromißhaft, weil die Luftleitteile meist nur schwer in die Fahrerhausgestaltung einzubeziehen waren, insbesondere wenn es die verschiedensten Ausstattungsvarianten zu berücksichtigen galt.

Es ist daher Aufgabe der Erfindung, für den Fahrerhaus-Boden eine Konstruktion zu schaffen, die sich durch wenige Teile mit geringen Kosten herstellen läßt und ein hohes Nutzenpotential aufweist.

Diese Aufgabe ist erfindungsgemäß durch eine Boden-Konstruktion mit den im Anspruch 1 gekennzeichneten Merkmalen gelöst.

Vorteilhafte Ausgestaltungen und Weiterbildungen bzw. Ergänzungen dieser Lösung sind in den Unteransprüchen angegeben.

Der technische Fortschritt und der Vorteil der erfindungsgemäßen Lösung besteht in der Reduzierung der Bodengruppen-Hauptteile. auf vier, nämlich ein Motortunnelblech, zwei Bodenbleche und den Multifunktionsquerträger, wodurch eine zeit- und kostengünstige Herstellung des Fahrerhaus-Bodens möglich ist und sich auch die Logistikkosten senken sowie eine exakte Zuordnung der Boden-Teile bei ihrem Zusammenbau erzielen lassen. Es reduziert sich auch der Punktschweißaufwand und damit das Korrosionsrisiko an der Fahrerhausunterseite. Der erfindungsgemäße Multifunktionsquerträger übernimmt - wie der Name schon sagt - eine Reihe von Funktionen. Er bildet
- ein Boden- und Fahrerhausquerversteifungsorgan, das sich über die gesamte Fahrerhausbreite unmittelbar unter den Sitzen erstreckt und so auch die Insaßensicherheit bei einem Seitenaufprall erhöht,
- eine Konsole für den Anbau von Fahrer- und Beifahrersitz, wobei die Sitze auch mit integrierten Sicherheitsgurten ausgestattet sein können,
- ein Versteifungsorgan im Bereich der Schalthebeldurchtrittsöffnung,
- einen Heizluftverteilerkanal mit Auslaßöffnungen für Heizluft, die von einer unter dem Fahrerhausboden angeordneten Luftzusatzheizung/Standheizung erzeugt wird, und
- ein Abstütz-, Halterungs- und Befestigungsorgan für weitere Fahrerhaus-Einbauteile, wie einen Mittelsitz, Stau- und Ablagekasten, Autotelefon und sonstige Kommunikationsanlagen.

Als besonders vorteilhaft erweist sich auch die integrale Ausformung der inneren Boden-Längsträger am Motortunnelblech und/oder den an diesem anschließenden Bodenblechen sowie die integrale Ausformung der äußeren Bodenlängsträger am äußeren Randbereich jeweils eines Bodenbleches und/oder am unteren Randbereich jeweils zweier eine Fahrerhaus-Seitenwand bildender Bleche, wie in den Ansprüchen 10 bis 15 im Detail angegeben.

Nachstehend ist die erfindungsgemäße Lösung anhand mehrerer in der Zeichnung dargestellter Ausführungsbeispiele noch näher erläutert. In der Zeichnung zeigen:
- Fig. 1: in perspektivischer Explosionsdarstellung von vom gesehen ein Motortunnelblech sowie ein linksseitig sich daran anschließendes Bodenblech und die beiden die linke Seitenwand eines Fahrerhauses bildenden Seitenwandbleche,
- Fig. 2: schematisch einen Ausschnitt aus der Bodenkonstruktion im hinteren Bereich eines Fahrerhauses mit einer Ausführungsform des inneren und äußeren Längsträgers,
- Fig. 3: schematisch einen Ausschnitt aus der Bodenkonstruktion gemäß Fig. 2 im Bereich der Türen,
- Fig. 4: schematisch einen Ausschnitt aus der Bodenkonstruktion im hinteren Bereich eines Fahrerhauses mit einer weiteren Ausführungsform des inneren und äußeren Längsträgers,
- Fig. 5: schematisch einen Ausschnitt aus der Bodenkonstruktion gemäß Fig. 4 im Bereich der Türen,
- Fig. 6: schematisch einen Ausschnitt aus der Bodenkonstruktion gemäß Fig. 2 und 3 in Perspektivansicht und zusätzlich in Explosionsdarstellung eine Ausführungsform des erfindungsgemäßen Multifunktionsquerträgers,
- Fig. 7: einen Querschnitt durch den Multifunktionsquerträger gemäß Fig. 6 entlang der dortigen Schnittlinie A-A, und
- Fig. 8: einen Längs-Schnitt durch den Multifunktionsquerträger gemäß Fig. 6 entlang der dortigen Schnittlinie B-B.

In den Figuren sind gleiche bzw. einander entsprechende Bauteile mit gleichen Bezugszeichen angezogen.

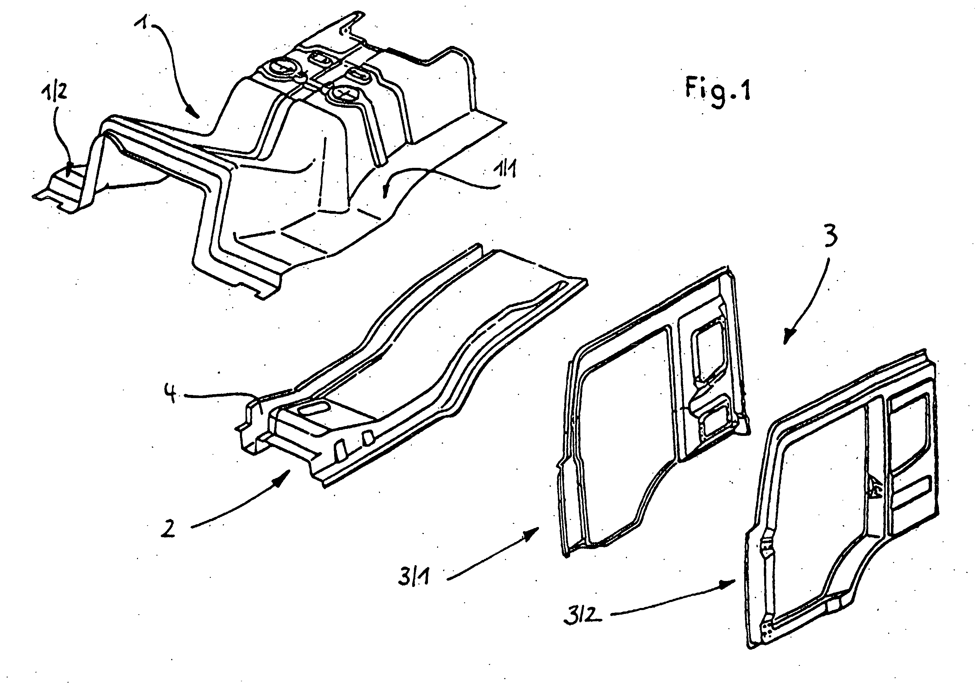

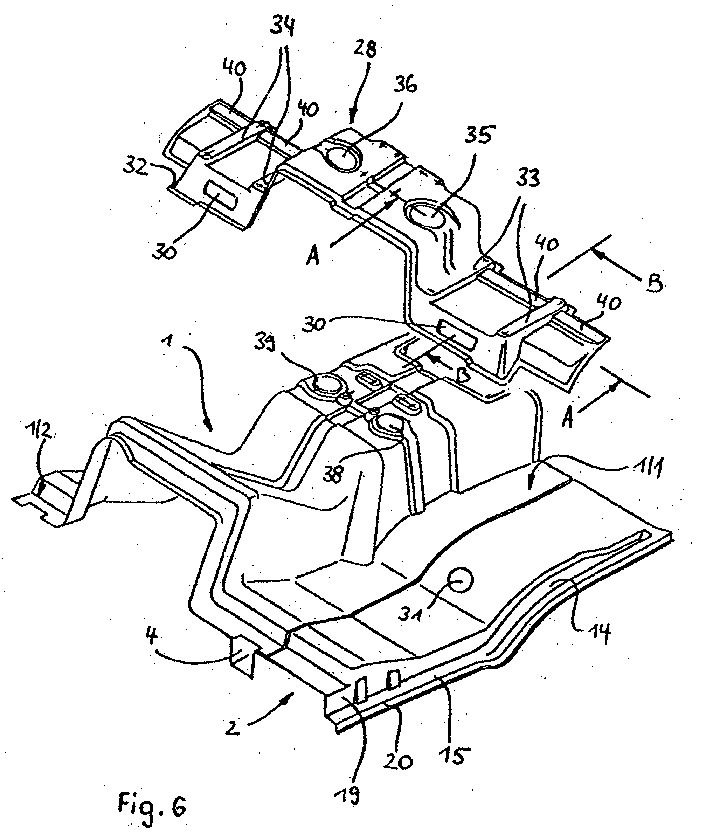

Die Roh-Bodengruppe eines kippbaren LKW-Fahrerhauses besteht aus einem Motortunnelblech 1, je einem sich an einer der beiden Seiten desselben anschließenden Bodenblech 2 und einem Multifunktionsquerträger 28. Letzterer ist der Übersichtlichkeit wegen in den Figuren 1 bis 5 weggelassen worden und nur in die Figuren 6 bis 8 einbezogen dargestellt. An jedem Bodenblech 2 schließt sich außen eine Seitenwand 3 des Fahrerhauses an, die sich im Rohzustand aus zwei entsprechend gepreßten Blechen 3/1 und 3/2 zusammensetzt. Die Teile 1, 2, 3/1, 3/2 und 28 sind jeweils durch Blechpreßteile realisiert.

Die inneren Längsträger 4 sind durch integrale Ausformung am Motortunnelblech 1 und/oder den an diesem'anschließenden Bodenblechen 2 gebildet. Dabei kann ein innerer Längsträger 4, wie aus der Zeichnung gemäß Figur 1, 2 und 3 ersichtlich, den im Querschnitt nach Art eines Hutprofiles mit nach unten ausgeformter Rinne 5 und beidseitigen Auflageflächen 6, 7 gestalteten inneren Randbereich 8 eines Bodenbleches 2 gebildet sein, wobei das im Querschnitt ebenfalls nach Art eines Hutprofiles gestaltete Motortunnelblech 1 mit jeweils einem seiner beiden unteren Querabschnitte 1/1, 1/2 die bodenblechinterne Rinne 5 überdeckt und an den beiderseits derselben gegebenen Auflageflächen 6, 7 aufliegend z. B. durch Punktschweißen befestigt ist, wodurch sich der innere Längsträger 4 in Form eines geschlossenen Kastenträgers ergibt.

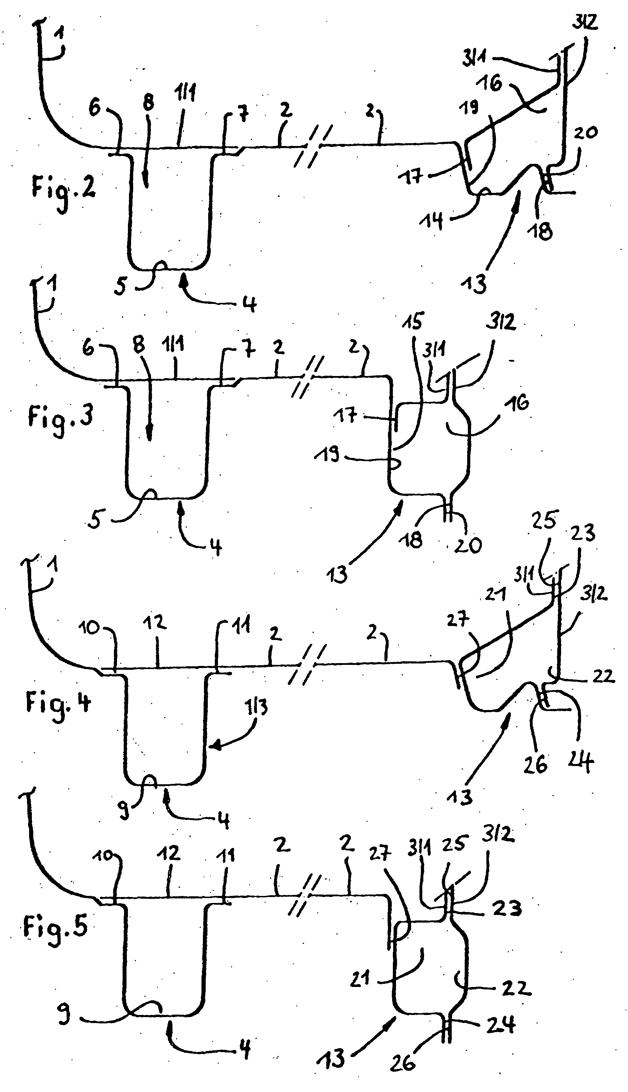

Alternativ hierzu. kann ein innerer Längsträger 4 aber auch, wie die Figuren 4 und 5 zeigen, durch den im Querschnitt nach Art eines Hutprofiles mit nach unten ausgeformter Rinne 9 und beiderseits derselben gegebenen Auflageflächen 10, 11 gestalteten unteren seitlich äußeren Querabschnitt 1/3 des Motortunnelbleches 1 gebildet sein, an dem ein mit. seinem ebenen Randbereich 12 die trägerbildende Rinne 9 überdeckendes und auf den beiderseits derselben gegebenen Auflageflächen 10, 11 aufliegendes Bodenblech 2, z. B. durch Punktschweißen, befestigt ist, wodurch sich der Träger 4 auch bei. dieser Ausführungsvariante in Form eines geschlossenen Kastenträgers ergibt.

In den Figuren 2, 3 und 4, 5 ist jeweils im rechten Teil der Darstellung eine Ausführungsform eines äußeren Längsträgers 13 aufgezeigt. Bei der Version gemäß Fig. 2, 3 ist ein solcher äußerer Längsträger 13 im hinteren Fahrerhausbereich (Fig. 2) durch eine am äußeren Randbereich eines Bodenbleches 2 nach unten ausgeformte Rinne 14, die - wie Fig. 3 zeigt - im Bereich einer Fahrerhaustür in eine Einbuchtung 15 übergeht, und eine Profilierung des unteren Randbereiches der beiden eine Seitenwand 3 bildenden Bleche 3/1, 3/2 im Sinne einer nach unten offenen Rinne 16 gebildet. Dabei weisen diese beiden Bleche 3/1, 3/2 an ihren unteren Randbereichen zumindest annähernd vertikale Anschlußflächen 17, 18 auf, mit denen sie an entsprechenden inneren und äußeren Gegenflächen 19, 20 an der Rinne 14 bzw. Einbuchtung 15 anliegen und dort z. B. mittels Punktschweißen befestigt sind. Demzufolge stellt sich der äußere Längsträger 13 nach Vereinigung des Bodenbleches 2 mit den beiden Seitenwand-Blechen 3/1, 3/2 als geschlossener Kastenträger dar.

Bei der Ausführungsform gemäß Figur 4, 5 ist ein solcher äußerer Längsträger 13 durch eine Profilierung des unteren Randbereiches der beiden eine Seitenwand 3 bildenden Bleche 3/1, 3/2 mit Ein- und/oder Ausbuchtungen 21, 22 sowie Anlageflächen 23, 24, 25, 26 unterhalb und oberhalb der letzteren in dem Sinne gebildet, daß sich nach Zusammenfügung dieser beiden Bleche 3/1, 3/2 und Verbindung derselben z. B. durch Punktschweißen im Bereich der aneinander anliegenden Anlageflächen 23, 25 bzw. 24, 26 ein Kastenträger ergibt, der am abgewinkelten äußeren Rand 27 des Bodenbleches 2 anliegend z. B. durch Punktschweißen befestigt ist.

Für die Herstellung des Motortunnelbleches 1, der beiden Bodenbleche 2 und der beiden je eine Seitenwand 3 bildenden Bleche 3/1, 3/2 wird als Ausgangsmaterial ein Rohblech mit einer auf die Funktion der Längsträger 4, 13 abgestellten Dicke verwendet. Alternativ kann auch ein Blechverbund aus am Stoß zusammengeschweißten Blechen unterschiedlicher Dicke verwendet werden, wobei die dickeren Bleche bzw. Blechabschnitte jene Bereiche bilden, aus denen die Längsträger 4, 13 ausgeformt werden.

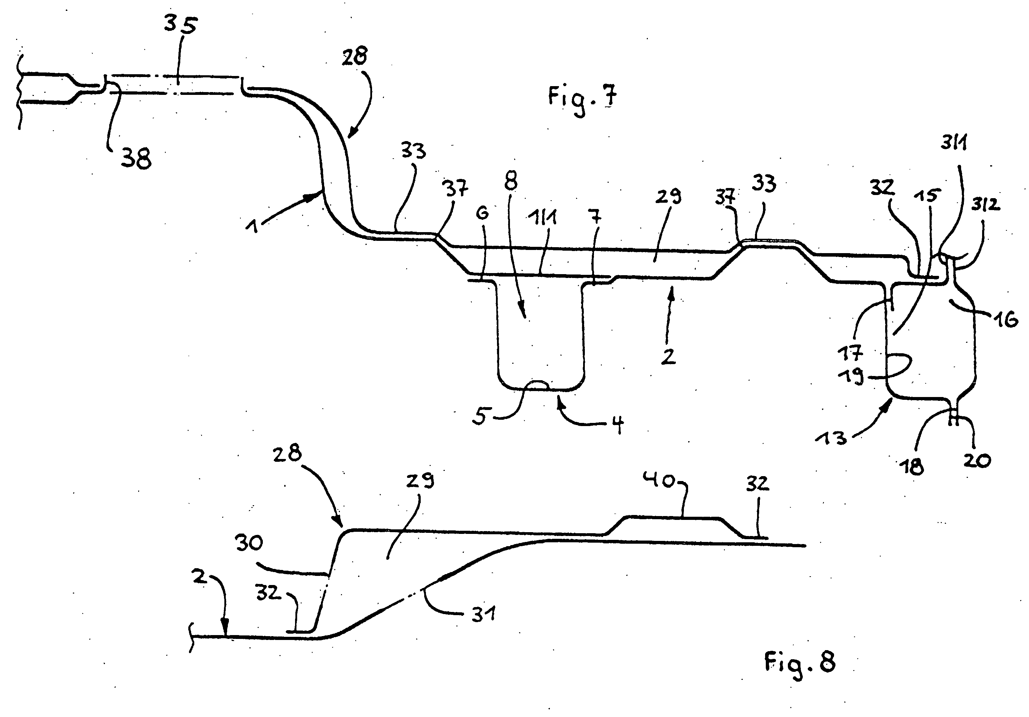

Das Motortunnelblech 1 mit den beiden links und rechts desselben wie vorstehend dargelegt befestigten Bodenblechen 2 wird von dem oben an diesen Teilen 1, 2 angeschlossenen und befestigten Multifunktionsquerträger 28 überbrückt. Dieser erfindungsgemäße Multifunktionsquerträger 28 ist - wie gut aus Fig. 6 ersichtlich - in sich querschnittsmäßig derart ausgebildet und strukturiert als einstückiges Blechpreßteil ausgeformt hergestellt, daß er sich über die ganze oder zumindest den größten Teil der Breite des Fahrerhausbodens erstreckt und folgende Organe bzw. Funktionsteile bildet, nämlich
- ein Boden- und Fahrerhausquerversteifungsorgan,
- eine Konsole für Fahrer- und Beifahrersitz,
- einen Heizluftverteilerkanal 29 mit Auslaßöffnungen 30 für Heizluft, die von einer unter einem Bodenblech 2 angeordneten Luftzusatzheizung bzw. Standheizung erzeugt und über bodenblechinterne Eintrittsöffnungen 31 (siehe Fig. 8) in ihn eingeleitet werden,
- ein Abstütz-, Halterungs- und Befestigungsorgan für weitere Fahrerhauseinbzw. -anbauteile oder -ausstattungselemente, wie einen Mittelsitz über den Motortunnel, Stau-und Ablagekasten, Autotelefon und dergleichen.

Am Multifunktionsquerträger 28 sind außen entweder ein umlaufender Auflage- und Befestigungsflansch 32 oder nur abschnittsweise Auflage- und Befestigungsflansche vorgesehen, mit dem bzw. denen er an den Boden-Teilen 1, 2, gegebenenfalls auch dem Seitenwand-Teil 3/1, aufliegt und dort, z. B. durch Punktschweißen, befestigt ist. Nach seiner Befestigung an diesen Teilen 1, 2 und gegebenenfalls 3/1 bildet der Multifunktionsquerträger 28 mit diesen einen hohlen Kastenträger, durch den der Heizluftverteilerkanal 29 begrenzt ist. Jedes der beiden Bodenbleche 2 weißt eine Einlaßöffnung 31 für den wahlweise links- oder rechtsseitigen Eintritt der ebenfalls wahlweise unter dem linken oder rechten Bodenblech 2 angebauten Luftzusatzheizung bzw. Standheizung auf, wobei die jeweils nicht benutzte Einlaßöffnung 31 durch einen Deckel verschlossen ist. Außerdem kann die näher zu einer Heizluft-Einlaßöffnung 31 hin gelegene Auslaßöffnung 30 durch ein entsprechend gestaltetes Luftumlenkteil gegen den direkt ankommenden Warmluftstrahl abgeschirmt sein, so daß sich eine vergleichsmäßigte Verteilung der Heizluft über alle Auslaßöffnungen 30 ergibt. Diese Heizfuft-Auslaßöffnungen 30 sind am Multifunktionsquerträger 28, wie aus Fig. 6 gut ersichtlich, vorderseitig im Bereich von integrierten Konsolen 33, 34 gegeben, die zur Abstützung und Befestigung des Fahrersitzes und Beifahrersitzes dienen. Mit 35, 36 sind Durchbrüche im Multifunktionsquerträger 28 oberhalb des Motortunnels bezeichnet, die zur wahlweisen Durchführung eines Gangschalthebel eines Rechts- oder Linkslenker-LKW dienen, wobei der jeweils nicht benutzte Durchbruch durch einen Deckel verschlossen ist. Auch im Umfangsbereich der Durchbrüche 35, 36 sind Auflagebereiche gegeben, mit denen der Multifunktionsquerträger 28 am Motortunnelblech 1 abgestützt und dort, z. B. durch Punktschweißen, befestigt ist.

Die Konsolen 33, 34 sind am Multifunktionsquerträger 28 durch nach oben ausgeprägte Längssicken realisiert, die von entsprechend gestalteten Auflagerampen 37 am Motortunnelblech 1 und den Bodenblechen 2 - wie aus Fig. 7 ersichtlich - formschlüssig untergriffen werden und so für einen sicheren Querverbund sorgen. Auch im Bereich der Durchbrüche 35, 36 am Multifunktionsquerträger 28 ist dadurch, daß diese von entsprechend hochgeprägten Rändern der zugehörigen Durchbrüche 38, 39 oben am Motortunnelblech 2 formschlüssig durchgriffen werden, für einen sicheren Querverbund gesorgt. Da in diesen Anlage- und Formschlußbereichen der Multifunktionsquerträger 28 und das Motortunnelblech 2 sowie die beiden Bodenbleche 2 zusätzlich miteinander, z. B. durch Punktschweißen, verbunden sind, ergibt sich dort auch eine vergleichsweise hohe Strukturfestigkeit. Quersicken 40 am hinteren Endbereich des Multifunktionsquerträger 28 dienen ebenfalls zu dessen Versteifung und Erhöhung der Strukturfestigkeit.

## Patentansprüche

1. Boden-Konstruktion am kippbaren Fahrerhaus eines Lastkraftwagen, dessen Boden aus einem Motortunnelblech (1) und mehreren Bodenblechen (2) sowie inneren und äußeren Längsträgern zusammengesetzt ist, **dadurch gekennzeichnet, daß** das Motortunnelblech (1) und die beiden links und rechts desselben anschließend an diesem befestigten Bodenbleche (2) von einem oben an diesen Teilen (1, 2) angeschlossenen Multifunktionsquerträger (28) überbrückt sind.

2. Boden-Konstruktion nach Anspruch 1, **dadurch gekennzeichnet, daß** der Multifunktionsquerträger (28) in sich querschnittsmäßig derart ausgebildet und strukturiert ausgeformt ist, daß er
- ein Boden- und Fahrerhausquerversteifungsorgan,
- eine Konsole für Fahrer- und Beifahrersitz,
- einen Heizluftverteilerkanal (29) mit Auslaßöffnungen (30) für eine unter dem Bodenblech (2) angeordnete Luftzusatzheizung bzw. Standheizung,
- ein Abstütz-, Halterungs- und Befestigungsorgan für weitere Fahrerhauseinbzw. -anbauteile oder -ausstattungselemente, z. B. einen Mittelsitz
bildet.

3. Boden-Konstruktion nach einem der Ansprüche 1 und 2, **dadurch gekennzeichnet, daß** der Multifunktionsquerträger (28) durch ein einstückiges Blechpreßteil realisiert ist.

4. Boden-Konstruktion nach einem der vorhergehenden Ansprüche, **dadurch gekennzeichnet, daß** sich der Multifunktionsquerträger (28) über die ganze bzw. zumindest den größten Teil der Breite des Fahrerhaus-Bodens (1, 2) erstreckt.

5. Boden-Konstruktion nach einem der vorhergehenden Ansprüche, **dadurch gekennzeichnet, daß** am Multifunktionsquerträger (28) außen entweder ein umlaufender Auflage- und Befestigungsflansch (32) oder auch nur abschnittsweise Auflage- und Befestigungsflansche für eine Verbindung, insbesondere durch Punktschweißen, mit den Boden-Teilen (1, 2) vorgesehen sind.

6. Boden-Konstruktion nach einem der vorhergehenden Ansprüche, **dadurch gekennzeichnet, daß** der Multifunktionsquerträger (28) nach seiner Befestigung an den Boden-Teilen (1, 2) mit diesen einen sich über die gesamte Fahrerhausbodenbreite erstreckenden sowie den Heizluftverteilerkanal (29) begrenzenden Kastenträger bildet.

7. Boden-Konstruktion nach einem der Ansprüche 2 bis 6, **dadurch gekennzeichnet, daß** jedes der beiden sich am Motortunnelblech (1) anschließenden Bodenbleche (2) eine Eintrittsöffnung (31) für den wahlweise links- oder rechtsseitigen Eintritt der von der wahlweise am links- oder rechtsseitigen Bodenblech (2) angebauten Luftzusatzheizung erzeugten Heizluft aufweist, wobei die jeweils nicht benutzte Einlaßöffnung (31) durch einen Deckel verschlossen ist.

8. Boden-Konstruktion nach einem der Ansprüche 2 bis 7, **dadurch gekennzeichnet, daß** die Heizluft-Auslaßöffnungen (30) am Multifunktionsquerträger (28) vorderseitig im Bereich der Fahrer- und Beifahrersitz-Befestigungskonsolen angeordnet sind.

9. Boden-Konstruktion nach einem der Ansprüche 2 bis 8, **dadurch gekennzeichnet, daß** die zur Abstützung und Befestigung von Fahrer- und Beifahrersitz dienenden Konsolen (33, 34) am Multifunktionsquerträger (28) durch nach oben ausgeprägte Längssicken realisiert sind, die von entsprechend gestalteten Auflagerampen (37) am Motortunnelblech (1) und den Bodenblechen (2) formschlüssig untergriffen und dort aneinander, z. B. durch Punktschweißen, befestigt sind.

10. Boden-Konstruktion nach Anspruch 1, **dadurch gekennzeichnet, daß** die inneren Längsträger (4) durch integrale Ausformung am Motortunnelblech (1) und/oder den an diesem anschließenden Bodenblechen (2) gebildet sind.

11. Boden-Konstruktion nach Anspruch 1, **dadurch gekennzeichnet, daß** die äußeren Längsträger (13) durch integrale Ausformung am äußeren Randbereich jeweils eines Bodenbleches (2) und/oder am unteren Randbereich jeweils zweier eine Fahrerhaus-Seitenwand (3) bildender Bleche (3/1, 3/2) realisiert sind.

12. Boden-Konstruktion nach Anspruch 10, **dadurch gekennzeichnet, daß** ein innerer Längsträger (4) durch den im Querschnitt nach Art eines Hutprofiles mit nach unten ausgeformter Rinne (5) und beiderseits derselben gegebenen Auflageflächen(6, 7) gestalteten inneren Randbereich (8) eines Bodenbleches (2) gebildet ist, wobei das im Querschnitt ebenfalls nach Art eines Hutprofiles gestaltete Motortunnelblech (1) mit jeweils einem seiner beiden unteren Querabschnitte (1/1, 1/2) die bodenblechinterne Rinne (5) überdeckt und an den beiderseits derselben gegebenen Auflageflächen (6, 7) aufliegend z. B. durch Punktschweißen befestigt ist, wodurch sich der innere Längsträger (4) in Form eines geschlossenen Kastenträgers ergibt.

13. Boden-Konstruktion nach Anspruch 10, **dadurch gekennzeichnet, daß** ein innerer Längsträger (4) durch den im Querschnitt nach Art eines Hutprofiles mit nach unten ausgeformter Rinne (9) und beiderseits derselben gegebenen Auflageflächen (10, 11) gestalteten unteren seitlich äußeren Querabschnitt (1/3) am Motortunnelblech (1) gebildet ist, an dem ein mit seinem ebenen Randbereich (12) die trägerbildende Rinne (9) überdeckende und auf den beiderseits derselben gegebenen Auflageflächen (10,11) aufliegendes Bodenblech (2) z. B. durch Punktschweißen befestigt ist, wodurch sich der innere Längsträger (4) in Form eines geschlossenen Kastenträgers ergibt.

14. Boden-Konstruktion nach Anspruch 11, **dadurch gekennzeichnet, daß** ein äußerer Längsträger (13) durch eine am äußeren Randbereich eines Bodenbleches (2) nach unten ausgeformte Rinne (14) bzw. Einbuchtung (15) und eine Profilierung des unteren Randbereiches der beiden eine Fahrerhaus-Seitenwand (3) bildenden Bleche (3/1, 3/2) im Sinne einer nach unten offenen Rinne (16) gebildet ist, wobei diese beiden Bleche (3/1, 3/2) an ihren unteren Randbereichen zumindest annähernd vertikale Anschlußflächen (17, 18) aufweisen, mit denen sie an entsprechenden Gegenflächen (19, 20) an der Rinne (14) bzw. Einbuchtung (15) anliegen und dort z. B. durch Punktschweißen befestigt sind, demzufolge sich der äußere Längsträger (13) nach Vereinigung des Bodenbleches (2) mit den beiden Seitenwand-Blechen (3/1, 3/2) als Kastenträger ergibt.

15. Boden-Konstruktion nach Anspruch 11, **dadurch gekennzeichnet, daß** ein äußerer Längsträger (13) durch eine Profilierung des unteren Randbereiches der beiden eine Seitenwand (3) bildenden Bleche (3/1, 3/2) mit Ein- und/oder Ausbuchtungen (21, 22) sowie Anlageflächen (23, 24, 25, 26) unterhalb und oberhalb derselben in dem Sinne realisiert ist, daß sich nach Zusammenfügung dieser beiden Seitenwand-Bleche (3/1, 3/2) und Verbindung derselben, z. B. durch Punktschweißen, im Bereich der aneinander anliegenden Anlageflächen (23, 25; 24,26) ein Kastenträger ergibt, der am abgewinkelten äußeren Rand (27) des Bodenbleches (2) anliegend, z. B. durch Punktschweißen, befestigt ist.

## Claims

1. Floor construction in a tiltable truck cab whose floor is composed of an engine tunnel panel (1) and several floor panels (2) as well as of internal and external longitudinal members, **characterised in that** the engine tunnel panel (1) and the two floor panels (2) attached to it (1) on the left and right-hand sides are bridged by a multi-function cross member (28) connected on top of these parts (1, 2).

2. Floor construction according to Claim 1, **characterised in that** the multi-function cross member (28) in its cross-section is designed and structured in such a way that it forms
• a transverse reinforcement organ for the floor and cab,
• a console for the driver's and co-driver's seats
• a hot-air distributing duct (29) with outlet orifices (30) for an air auxiliary heater located underneath the floor panel (2)
• a supporting, holding and fastening organ for further cab installation and/or attachment parts or equipment elements, eg a centre seat.

3. Floor construction according to one of the Claims 1 and 2, **characterised in that** the multi-function cross member (28) is designed as a single-piece sheet-metal pressed part.

4. Floor construction according to one of the foregoing Claims, **characterised in that** the multi-function cross member (28) extends over the entire or at least the largest portion of the width of the cab floor (1, 2).

5. Floor construction according to one of the foregoing Claims, **characterised in that** the multi-function cross member (28) is provided either on its perimeter with a continuous support and attachment flange (32) or, only in some areas, with support and attachment flanges for a connection with the floor parts (1, 2), said connection being established particularly by means of spot welding.

6. Floor construction according to one of the foregoing Claims, **characterised in that** the multi-function cross member (28), once attached to the floor parts (1, 2), forms together with these parts (1, 2) a box-type carrier that extends over the entire cab floor width and limits the hot-air distributing duct (29).

7. Floor construction according to one of the Claims 2 to 6, **characterised in that** each of the two floor panels (2) attached to the engine tunnel panel (1) is provided with an inlet orifice (31) for the entry, on either the left- or right-hand side, of hot air generated by the air auxiliary heater attached to either the left or right-hand-side floor panel (2), the inlet orifice (31) not in use being closed up by a cap.

8. Floor construction according to one of the Claims 2 to 7, **characterised in that** the hot-air outlet orifices (30) on the multi-function cross member (28) are arranged at the front end in the area of the attachment consoles for the driver's and co-driver's seats.

9. Floor construction according to one of the Claims 2 to 8, **characterised in that** the consoles (33, 34) attached to the multi-function cross member (28) and serving to support and fasten the driver's and co-driver's seats are designed as upward facing longitudinal beads positively underpinned by suitably designed support ramps (37) on the engine tunnel panel (1) and by the floor panels (2) and attached to each other eg by means of spot welding.

10. Floor construction according to Claim 1, **characterised in that** the inner longitudinal members (4) are provided in the form of an integral shaping of the engine tunnel panel (1) and/or of the floor panels (2) connected to it (1).

11. Floor construction according to Claim 1, **characterised in that** the outer longitudinal members (13) are provided in the form of an integral shaping of the outer margin area of each of the floor panels (2) and/of in the lower margin of each pair of panels (3/1, 3/2) forming a cab side wall (3).

12. Floor construction according to Claim 10, **characterised in that** an inner longitudinal member (4) is formed by the inner margin area (8) of a floor panel (2), the cross-section of which inner margin area (8) is designed like the profile of a hat with a depression (5) and support faces (6, 7) on both sides of said depression (5), whereby the engine tunnel panel (1), whose cross-section is also designed like the profile of a hat, covers with each of its two lower transverse sections (1/1, 1/2) the depression (5) in the floor panel, rests on the support faces (6, 7) provided on both sides of said depression (5) and is attached eg by means of spot welding, which imparts to the inner longitudinal member (4) the form of a closed box-type carrier.

13. Floor construction according to Claim 10, **characterised in that** an inner longitudinal member (4) is formed by the lower lateral outer cross-section (1/3) on the engine tunnel (1), the cross-section of which lower lateral outer transverse section (1/3) is designed like the profile of a hat with a depression (9) and support faces (10, 11) on both sides of said depression (9), to which lower lateral outer transverse section (1/3) is attached a floor panel (2) which with its flat margin area (12) covers the carrier-forming depression (9), rests on the support faces (10, 11) provided on both sides of said depression (9) and is attached eg by means of spot welding, which imparts to the inner longitudinal member (4) the form of a closed box-type carrier.

14. Floor construction according to Claim 11, **characterised in that** an outer longitudinal member (13) is formed by a depression (14) or recess (15) in the outer margin area of a floor panel (2) and by the profiling of the lower margin area of the two panels (3/1, 3/2) forming a cab side wall (3) in the sense of a channel (16) open at the bottom, these two panels (3/1, 3/2) having in their lower margin areas at least approximately vertical connecting faces (17, 18) with which they contact the corresponding counterfaces (19, 20) on the depression (14) and at the recess (15) and are attached to said counterfaces (19, 20)/said recess (15) eg by means of spot welding, as a result of which attachment the outer longitudinal member (13), after the union of the floor panel (2) with the two side wall panels (3/1, 3/2), forms a box-type carrier.

15. Floor construction according to Claim 11, **characterised in that** an outer longitudinal member (13) is formed as a result of the profiling of the lower margin area of the two panels (3/1, 3/2) forming a cab side wall (3) and having recesses and/or protrusions (21/22) as well as contact faces (23, 24, 25, 26) at the lower and upper ends of said panels (3/1, 3/2) **in that** sense that after the joining of these two side-wall panels (3/1, 3/2), eg by means of spot welding, a box-type carrier is formed in the area of the adjacent contact faces (23, 25; 24, 26), contacts the downward-angled outer margin area (27) of the floor panel (2) and is attached to it (27) eg by means of spot welding.

## Revendications

1. Construction de plancher de cabine basculante de camion dont le plancher est composé d'une tôle de tunnel de moteur (1) et de plusieurs tôles de plancher (2) ainsi que de longerons intérieurs et extérieurs,
**caractérisé en ce que**
la tôle de tunnel de moteur (1) et les deux tôles de plancher (2) fixées à celui-ci de façon adjacente à gauche et à droite, sont enjambées par une traverse multifonctions (28) reliée à ces pièces (1, 2).

2. Construction de plancher selon la revendication 1,
**caractérisé en ce que**
la traverse multifonctions (28) a une section et une structure telles qu'elles forment
- un organe de rigidification transversal du plancher et de la cabine,
- une console pour le conducteur et le passage,
- un canal de répartition d'air chaud (29) avec des orifices de sortie (30) pour un chauffage à air chaud ou un chauffage d'arrêt, installé sous la tôle de plancher (2),
- un organe d'appui, de maintien et de fixation pour d'autres équipements de cabine ou éléments d'équipement comme par exemple un siège central.

3. Construction de plancher selon l'une quelconque des revendications 1 et 2,
**caractérisée en ce que**
la traverse multifonctions (28) est constituée par une pièce de tôle emboutie.

4. Construction de plancher selon l'une quelconque des revendications précédentes,
**caractérisée en ce que**
la traverse multifonctions (28) s'étend sur toute la largeur du plancher (1, 2) de la cabine ou sur au moins une grande partie de celle-ci.

5. Construction de plancher selon l'une quelconque des revendications précédentes,
**caractérisée en ce que**
la traverse multifonctions (28) est munie extérieurement soit d'une bride d'appui et de fixation (32) périphérique soit seulement partiellement d'une bride d'appui et de fixation pour une liaison, notamment une liaison par soudure ponctuelle avec les parties de plancher (1, 2).

6. Construction de plancher selon l'une quelconque des revendications précédentes,
**caractérisée en ce que**
la traverse multifonctions (28), après sa fixation aux parties de plancher (1, 2) constitue une poutre en caisson s'étendant sur toute la largeur du plancher de la cabine et délimitant le canal de répartition d'air chaud (29).

7. Construction de plancher selon l'une quelconque des revendications 2 à 6,
**caractérisée en ce que**
chacune des deux tôles de plancher (2) adjacentes à la tôle de tunnel moteur (1) comporte un orifice d'entrée (31) pour l'entrée, située au choix du côté gauche ou du côté droit de l'installation de chauffage complémentaire, installé au choix sur la tôle de plancher (2) à gauche ou à droite, et l'orifice d'entrée (31) non utilisé est fermé par un couvercle.

8. Construction de plancher selon l'une quelconque des revendications 2 à 7,
**caractérisée en ce que**
les orifices de sortie d'air chaud (30) de la traverse multifonctions (28) se trouve dans la face avant au niveau de la console de fixation du siège du conducteur et du siège du passager.

9. Construction de plancher selon l'une quelconque des revendications 2 à 8,
**caractérisée en ce que**
les consoles (33, 34) servant à l'appui à la fixation du siège du conducteur et du passager sont réalisées sur la traverse multifonctions (28) par des nervures longitudinales venant en saillie vers le haut, ces nervures étant prises par en dessous par une liaison par la forme par des rampes d'appui (37) de forme correspondante de la tôle (1) de tunnel de moteur et des tôles de plancher (2), par une prise par la forme en étant fixées entre elles par exemple par une soudure ponctuelle.

10. Construction de plancher selon la revendication 1,
**caractérisée en ce que**
les logerons intérieurs (4) sont réalisés par une mise en forme intégrale de la tôle de tunnel de moteur (1) et/ou des tôles de plancher (2) rejoignant la tôle du tunnel moteur .

11. Construction de plancher selon la revendication 1,
**caractérisée en ce que**
les longerons extérieurs (13) sont réalisés par une mise en forme intégrale du bord extérieur de chaque tôle de plancher (2) et/ou de la zone de bord inférieur de chaque groupe de deux tôles (3/1, 3/2) formant la paroi latérale (3) de la cabine.

12. Construction de plancher selon la revendication 10,
**caractérisée en ce qu'**
un longeron intérieur (4) est formé par une goulotte (5) à section en forme de chapeau, avec une déformation tournée vers le bas et de part et d'autre de cette goulotte, des surfaces d'appui (6, 7) réalisées dans le bord intérieur (8) de la tôle de plancher (2),
la tôle de tunnel de moteur à section également en forme de chapeau, recouvre avec chaque fois l'un de ses deux segments transversaux inférieurs (1/1, 1/2), la goulotte (5) interne à la tôle de plancher et s'appuie sur les surfaces d'appui (6, 7) de part et d'autre de celle-ci, en étant fixée par exemple par une soudure ponctuelle, de manière à réaliser le longeron intérieur (4) sous la forme d'une poutre en caisson fermé.

13. Construction de plancher selon la revendication 10,
**caractérisée en ce qu'**
un longeron intérieur (4) est formé par le segment intérieure extérieur (1/3) de la tôle de tunnel de moteur (1) ayant une section en chapeau composé de la goulotte (9), déformée vers le bas, et de part et d'autre de celle-ci, des surfaces d'appui (10, 11) réalisées latéralement, sur, sur lequel une tôle de plancher (2) chevauchant par sa zone de bord (12), plane, la goulotte (9) formant la poutre et s'appuyant sur les deux surfaces d'appui (10, 11) de part et d'autre de celle-ci, est fixée par exemple par une soudure ponctuelle, pour réaliser le longeron intérieur (4) sous la forme d'une poutre en caisson fermé.

14. Construction de plancher selon la revendication 11,
**caractérisée par**
un longeron extérieur (13) réalisé par une goulotte (14) ou une partie en creux (15) formée vers le bas sur la zone de bord extérieur d'une tôle de plancher (2), et par un profil de la zone de bord inférieur des deux tôles (3/1, 3/2) formant une paroi latérale (3) de la cabine, dans le sens d'une goulotte (16) ouverte vers le bas,
les deux tôles (3/1, 3/2) ayant des zones de bords inférieurs avec des surfaces de liaison (17, 18) sensiblement verticales par lesquelles elles s'appuient contre les surfaces antagonistes (19, 20) de la goulotte (14) ou de la partie en creux (15) et y sont fixées par des soudures ponctuelles, pour obtenir ainsi le longeron extérieur (13) par réunion de la tôle de plancher (2) aux deux tôles de paroi latérale (3/1, 3/2) donnant une poutre en caisson.

15. Construction de plancher selon la revendication 11,
**caractérisé en ce qu'**
un longeron extérieur (13) est réalisé par un profilage de la zone de bord inférieur des deux zones (3/1, 3/2) formant une paroi latérale (3), avec des bossages en creux ou en relief (21, 22) et des surfaces d'appui (23, 24, 25, 26) en dessous et au-dessus de ces surfaces, de façon qu'après l'assemblage des deux tôles de paroi latérales (3/1, 3/2) et la liaison de celles-ci, par exemple par des soudures ponctuelles, au niveau des surfaces d'appui (23, 25 ; 24, 26), appliquées l'une contre l'autre, on obtient une poutre en caisson fixée contre le bord extérieur replié (27) de la tôle de plancher (2) par exemple par des soudures ponctuelles.
